# EUROPÄISCHE PATENTSCHRIFT

(11) **EP 3 766 706 B1**
(45) Veröffentlichungstag und Bekanntmachung des Hinweises auf die Patenterteilung: **04.01.2023**
(21) Anmeldenummer: 20178637.3
(22) Anmeldetag: 08.06.2020
(51) Int. Cl.: B60C 11/16

(54) **SPIKEPIN, SPIKE MIT EINEM SPIKEPIN UND FAHRZEUGLUFTREIFEN MIT SPIKES**
SPIKE PIN, SPIKE WITH SPIKE PIN, PNEUMATIC TYRES WITH SPIKES
BROCHE DE CRAMPON, CRAMPON DOTÉ D'UNE BROCHE DE CRAMPON ET PNEUMATIQUE POURVU DE CRAMPONS

(30) Priorität: 16.07.2019 DE 102019210491
(43) Veröffentlichungstag der Anmeldung: 20.01.2021
(73) Patentinhaber: Continental Reifen Deutschland GmbH, 30165 Hannover (DE)
(72) Erfinder: Hajduch, Jaroslav, 30419 Hannover (DE)
(74) Vertreter: Continental Corporation

(56) Entgegenhaltungen:
- EP-A1- 3 656 581
- EP-A2- 1 531 065
- GB-A- 1 473 967

## Beschreibung

Die Erfindung betrifft einen Spikepin, welcher in einen Spikekörper eines Spikes für einen Laufstreifen eines Fahrzeugluftreifens einsetzbar ist, wobei der Spikepin eine Hauptachse sowie im in den Spikekörper eingesetzten Zustand einen aus diesem herausragenden, äußeren Abschnitt mit einer Oberseite aufweist, wobei zumindest dieser Abschnitt einen sechseckigen Querschnitt aufweist und seine Oberseite durch Griffkanten begrenzt ist.

Ein derartiger Spikepin ist beispielsweise in der DE 103 54 331 A1 als zum Stand der Technik gehörend erwähnt. Ferner ist in der CN 101 269 613 A ein Spikepin mit einem langgestreckt sechseckigen Querschnitt offenbart.

Aus der GB 1 473 967 A ist ein Spike für einen Schuh, beispielsweise einen Golfschuh, bekannt. Der Spike setzt sich aus einem Spikepin und einem Spikekörper zusammen. Der aus dem Spikekörper herausragende Abschnitt des Spikepins weist eine kegelstumpfförmige Grundform auf und ist in Richtung seiner Spitze mit sechs über seinen Umfang aneinander anschließenden trapezähnliche Flächen versehen. Der Spikekörper ist an seiner Außenfläche mit nutförmigen Vertiefungen versehen.

Die EP 1 531 065 A2 offenbart einen Spikepin, welcher sich aus einem Oberteil und einem Unterteil zusammensetzt, wobei der Oberteil den außerhalb des Spikekörpers liegenden Spitzenbereich des Spikepins bildet. Eine "Rondiste" teilt den Spikepin in den Oberteil und den Unterteil. Der Oberteil umfasst eine Tafel, eine Kante oder eine Spitze, die in einem Abstand über der Rondistenebene angeordnet ist. Zwischen der Tafel, der Kante oder der Spitze und der Rondiste ist wenigstens eine Facette ausgebildet. Der derart ausgeführte Spikepin soll eine gute Haltbarkeit, also eine lange Lebensdauer, aufweisen.

Die einen Stand der Technik nach Art 54(3) EPÜ bildende EP 3 656 581 A1 offenbart einen Spike mit einem Spikekörper und einem Spikepin, welcher sich aus einem aus dem Spikekörper herausragenden äußeren Abschnitt, einen mittleren Abschnitt und einen Endabschnitt zusammensetzt. Der mittlere Abschnitt des Spikepins ist durch eine Umfangsfläche begrenzt, welche mit in der Erstreckungsrichtung der Hauptachse des Spikepins zueinander beabstandet ausgebildeten Vertiefungen und/oder Erhebungen versehen ist. Bei einem solchen Spike ist der Spikepin besonders fest im Spikekörper verankert.

Mittels Spikes lassen sich bekannter Weise die Griffeigenschaften von Fahrzeugluftreifen auf Schnee und Eis verbessern. Insbesondere beim Fahren auf mit Eis bedecktem Untergrund kommt der Ausgestaltung der Spikepins eine besondere Bedeutung zu. Es ist bekannt und üblich, Spikes mit speziell und unterschiedlich gestalteten Spikepins in ein und demselben Laufstreifen an bestimmten Positionen, etwa in der Laufstreifenmitte und in den seitlichen Bereichen des Laufstreifens zu positionieren, um eine möglichst gute Wirkung des bespikten Laufstreifens bei in unterschiedlichen Richtungen wirkenden Kräften sicherzustellen.

Der Erfindung liegt die Aufgebe zugrunde, einen Spikepin der eingangs genannten Art derart zu gestalten, dass er bei in unterschiedlichen Richtungen wirkenden Kräften gute Griffeigenschaften sicherstellt, sodass eine spezielle Orientierung der Spikes im Laufstreifen und/oder der Einsatz von Spikes mit unterschiedlich gestalteten Pins unterbleiben kann.

Gelöst wird die gestellte Aufgabe erfindungsgemäß dadurch, dass auf der Oberseite des Spikepins genau zwei ebene, in Draufsicht gleichschenklig-trapezförmige Hauptflächen ausgebildet sind, welche relativ zu einer Querschnittebene des äußeren Abschnittes, zu der die Hauptachse des Spikepins senkrecht ausgerichtet ist, unter einem Winkel von 5° bis 20° geneigt sind, wobei die Oberseite derart drehsymmetrisch gestaltet ist, dass sie ausschließlich durch eine Drehung um 180° um die Hauptachse des Spikepins auf sich selbst abgebildet wird.

Der erfindungsgemäße Spikepin zeichnet sich - im Vergleich zu den bisher bekannten Spikepins - durch eine höhere Anzahl an Griffkanten aus. Ferner befinden sich die Griffkanten sowie die Eckbereiche, an welchen die Griffkanten aneinander anschließen, bedingt durch die geneigten gleichschenklig-trapezförmigen Hauptflächen in unterschiedlichen "Höhenpositionen". In Laufstreifen von Fahrzeugluftreifen eingesetzte und mit derartigen Spikpins versehene Spikes sind besonders vorteilhaft, da sich die Spikepins beim Fahren auf eisigem Untergrund unabhängig von der Richtung der wirkenden Kräfte jeweils besonders wirkungsvoll verzahnen können.

Gemäß einer bevorzugten Ausführung weist zumindest der äußere Abschnitt des Spikepins einen regelmäßigen sechseckigen Querschnitt auf. Ein derartiger Querschnitt hat sich im Hinblick auf die richtungsunabhängige, verzahnende Wirkung des Spikepins als besonders günstig erwiesen.

Gemäß einer weiteren bevorzugten Ausführung beträgt der Winkel, unter welchem die zwei gleichschenklig-trapezförmigen Hauptflächen relativ zur Querschnittebene des äußeren Abschnittes geneigt sind, bis zu 10°.

Ferner ist es günstig, wenn die Griffkanten zumindest zum Teil angefast sind. Durch ein Anfasen werden aus einer Griffkante zwei Griffkanten gebildet, wodurch sich die Griffwirkung weiter verbessern lässt. Es ist in diesem Zusammenhang besonders günstig, wenn jene Griffkanten, welche die Trapezschenkel der gleichschenklig-trapezförmigen Hauptfläche sind, die von der

Querschnittebene weiter entfernt sind, doppelt-angefast sind und daher mit zwei Fasen versehen sind. Durch zwei Fasen werden drei Griffkanten gebildet. Diese Griffkanten sind - entsprechend ihrer Position am Spikepin - dabei jene Griffkanten, welche beim Fahren auf Eis am tiefsten eingreifen können, wodurch die Griffwirkung des Spikepins weiter verbessert ist.

Für die Griffwirkung, hat es sich ferner als vorteilhaft herausgestellt, wenn die zwei Fasen miteinander einen Winkel von 20° bis 45° einschließen.

Gemäß einer weiteren bevorzugten Ausführungsvariante weist der Spikepin über seine gesamte Erstreckung einen sechseckigen, insbesondere regelmäßig sechseckigen, Querschnitt auf. Ein solcher Spikepin lässt sich zusätzlich gut im Spikekörper verankern.

Die Erfindung betrifft ferner einen Spike mit einem erfindungsgemäßen Spikepin sowie einen Fahrzeugluftreifen mit einem Laufstreifen, in welchen eine Vielzahl derartiger Spikes eingesetzt ist.

Weitere Merkmale, Vorteile und Einzelheiten der Erfindung werden nun anhand der Zeichnung, die schematisch ein Ausführungsbeispiel der Erfindung zeigt, näher erläutert. Dabei zeigen
Fig. 1 einen Spike mit einer Ausführungsvariante der Erfindung,
Fig. 2 eine Ansicht auf den Spikepin des Spikes aus Fig. 1,
Fig. 3 eine vergrößerte Draufsicht auf den Spikepin aus Fig. 2 und
Fig. 4 eine vergrößerte Ansicht im Bereich des Spikepins des Spikes aus Fig. 1.

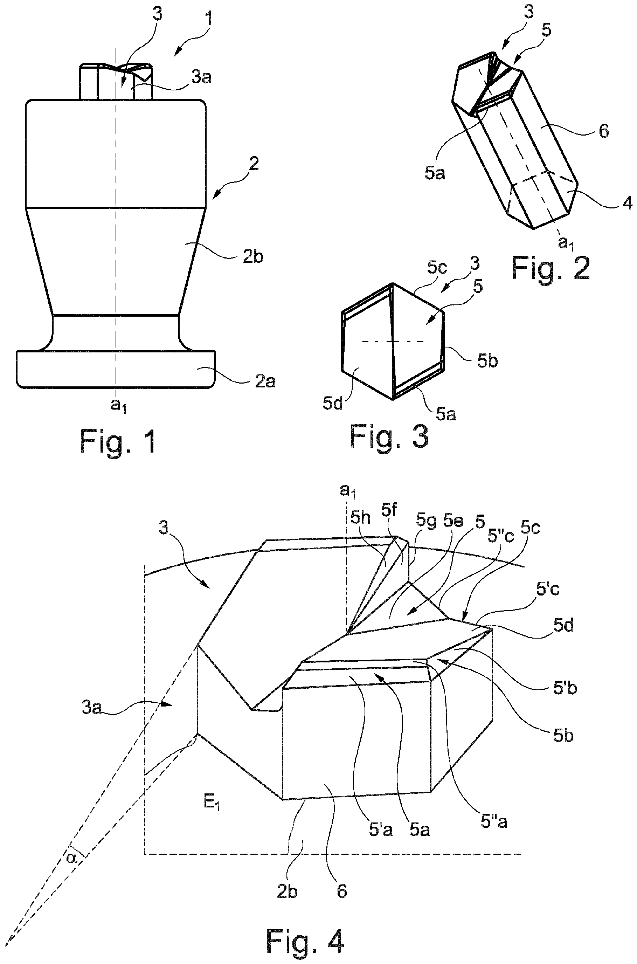

Fig. 1 zeigt einen Spike 1 in aufrecht stehender Position. Der Spike 1 weist einen Spikekörper 2 aus einem Fußflansch 2a und einem Oberflansch 2b sowie einen im Oberflansch 2b form- und/oder kraftschlüssig gehaltenen Spikepin 3 auf. Die bei aufrechtstehendem Spike 1 in vertikaler Richtung verlaufende Hauptachse a₁ des Spikes 1 ist gestrichelt angedeutet. Der Spikekörper 2 kann in an sich bekannter Weise ausgeführt sein, ist beispielsweise rotationssymmetrisch gestaltet und besteht beispielsweise aus Metall, Kunststoff, Gummi oder aus einer Kombination dieser Materialien. Der Spikepin 3 besteht insbesondere aus Hartmetall oder Sintermetall.

Wie Fig. 2 zeigt, ist der Spikepin 3 ein langgestreckter Körper, dessen Hauptachse der Hauptachse a₁ des Spikes 1 entspricht. Der Spikepin 3 weist, im Querschnitt betrachtet, die Gestalt eines regelmäßigen Sechseckes auf und ist durch eine ebene regelmäßigsechseckige Unterseite 4, eine speziell gestaltete Oberseite 5 sowie sechs Seitenflächen 6 begrenzt. Im eingesetzten Zustand des Spikepins 3 befindet sich die Unterseite 4 innerhalb des Oberflansches 2b, die Oberseite 5 befindet sich an einem aus dem Oberflansch 2b herausragenden, äußeren Abschnitt 3a des Spikepins 3 (Fig. 1). Der Spikepin 3 ist derart drehsymmetrisch gestaltet, dass er ausschließlich durch eine Drehung um 180° um die Hauptachse a₁ auf sich selbst abgebildet wird.

Gemäß Fig. 3 ist die Oberseite 5 des Spikepins 3 am äußeren Umfang durch sechs vorzugsweise angefaste Griffkanten 5a, 5b, 5c, welche jeweils einer Seite des Sechseckes zugeordnet sind, begrenzt. Dabei liegen jeweils die beiden Griffkanten 5a, die beiden Griffkanten 5b und die beiden Griffkanten 5c einander gegenüber.

Wie Fig. 4 zeigt, ist die Oberseite 5 des Spikepins 3 Großteiles von zwei ebenen, in Draufsicht (Fig. 3) gleichschenklig-trapezförmigen Hauptflächen 5d gebildet bzw. eingenommen, welche am äußeren Umfang des Spikepins 3 von jeweils aneinander anschließenden Griffkanten 5a, 5b, 5c begrenzt sind, wobei die Griffkanten 5a und 5c jeweils die beiden Trapezschenkel eines Trapezes bilden. In Fig. 4 ist ferner eine Querschnittebene E₁ des Spikepins 3 angedeutet, welche den äußeren Abschnitt 3a des Spikepins 3 am Niveau des Oberflansch 2b schneidet und zu welcher die Hauptachse a₁ senkrecht ausgerichtet ist. Die Hauptflächen 5d sind relativ zur Querschnittebene E₁ unter einem konstanten Winkel α von 5° bis 20°, insbesondere von bis zu 10°, geneigt, wobei sie entsprechend der drehsymmetrischen Gestalt des Spikepins 3 gegensinnig zueinander geneigt sind und einander ausschließlich an der Hauptachse a₁ kontaktieren.

Die Trapezschenkel bildenden Griffkanten 5a weisen dabei zur Querschnittebene E₁ einen größeren Abstand auf als die Trapezschenkel bildenden Griffkanten 5c.

Die Griffkanten 5a verlaufen gerade und sind jeweils doppelt angefast, sodass eine unmittelbar an die entsprechende Seitenfläche 6 anschließende Fase 5a' und eine an die Hauptfläche 5d anschließende Fase 5a" gebildet sind. Die Fase 5a' schließt mit der Fase 5a" einen Winkel von 20° bis 45° ein, wobei die Fase 5a" orthogonal zur Hauptachse a₁ und daher parallel zur Querschnittebene E₁ orientiert ist.

Die Griffkanten 5b verlaufen windschief zueinander und sind jeweils derart angefast, dass eine langgestreckte dreieckige Fase 5b' gebildet ist, welche entlang der Griffkanten 5b in Richtung zur jeweiligen Griffkante 5c ausläuft.

Die Griffkanten 5c sind als scharfe, einfach geknickte Kanten ausgeführt und setzen sich aus einem Kantenabschnitt 5c', welcher an die Griffkante 5b anschließt und die Hauptfläche 5d mitbegrenzt, und einem Kantenabschnitt 5c", welcher eine über einen Knick an die Hauptfläche 5d anschließende, langgestreckt dreieckige Nebenfläche 5e mitbegrenzt, zusammen. Der Kantenabschnitt 5c' schließt mit dem Kantenabschnitt 5c" einen Winkel von 120° bis 150° ein. Die dreieckige Nebenfläche 5e weist, ermittelt am Kantenabschnitt 5c", eine Breite von maximal 1,0 mm auf und reicht mit einer Spitze bis zur Hauptachse a₁.

Zwischen den Nebenflächen 5e und jener Hauptfläche 5d, an welche die jeweilige Nebenfläche 5e nicht anschließt, sind in vertikaler Richtung orientierte dreieckige Übergangsflächen 5f vorhanden, welche mit einer Spitze bis zur Hauptachse a₁ reichen und eine am äußeren Rand des Spikespins 3 liegende in vertikaler Richtung verlaufende Kante 5g aufweisen.

Beim gezeigten Ausführungsbeispiel ist zwischen den Übergangsflächen 5f und den Hauptflächen 5d jeweils eine im Wesentlichen dreieckige Fase 5h ausgebildet.

Die Fasen 5a', 5a", 5b', 5h weisen, im Querschnitt betrachtet, an ihrer breitesten Stelle eine Breite von vorzugsweise höchstens 1,0 mm auf.

Die Fasen 5a', 5a", 5b', 5h verleihen dem Spikepin 3 im Bereich seiner Oberseite 5 zusätzliche Griffkanten. Ferner stellt auch die in vertikaler Richtung verlaufende Kante 5g eine weitere Griffkante dar.

Die Erfindung ist auf die beschriebene Ausführungsvariante nicht beschränkt: Insbesondere kann der Spikepin auch lediglich an seinem aus dem Spikekörper herausragenden Abschnitt, im Querschnitt betrachtet, sechseckig ausgeführt sein.

### Bezugsziffernliste

- 1: Spike
- 2: Spikekörper
- 2a: Fußflansch
- 2b: Oberflansch
- 3: Spikepin
- 3a: Abschnitt
- 4: Unterseite
- 5: Oberseite
- 5a: Griffkante
- 5a': Fase
- 5a": Fase
- 5b: Griffkante
- 5b': Fase
- 5c: Griffkante
- 5c': Kantenabschnitt
- 5c": Kantenabschnitt
- 5d: Hauptfläche
- 5e: Nebenfläche
- 5f: Übergangsfläche
- 5g: Kante
- 5h: Fase
- 6: Seitenfläche
- a₁: Hauptachse
- α: Winkel
- E₁: Ebene

## Patentansprüche

1. Spikepin (3), welcher in einen Spikekörper (2) eines Spikes (1) für einen Laufstreifen eines Fahrzeugluftreifens einsetzbar ist, wobei der Spikepin (3) eine Hauptachse (a₁) sowie im in den Spikekörper (2) eingesetzten Zustand einen aus diesem herausragenden, äußeren Abschnitt (3a) mit einer Oberseite (5) aufweist, wobei zumindest dieser Abschnitt (3a) einen sechseckigen Querschnitt aufweist und seine Oberseite (5) durch Griffkanten (5a, 5b, 5c) begrenzt ist,
**dadurch gekennzeichnet,**
**dass** auf der Oberseite (5) des Spikepins (3) genau zwei ebene, in Draufsicht gleichschenklig-trapezförmige Hauptflächen (5d) ausgebildet sind, welche relativ zu einer Querschnittebene (E₁) des äußeren Abschnittes (3a), zu der die Hauptachse (a₁) des Spikepins (3) senkrecht ausgerichtet ist, unter einem Winkel (a) von 5° bis 20° geneigt sind, wobei die Oberseite (5) derart drehsymmetrisch gestaltet ist, dass sie ausschließlich durch eine Drehung um 180° um die Hauptachse (a₁) des Spikepins (3) auf sich selbst abgebildet wird.

2. Spikepin (3) nach Anspruch 1, **dadurch gekennzeichnet, dass** zumindest der äußere Abschnitt (3a) des Spikepins (3) einen regelmäßigen sechseckigen Querschnitt aufweist.

3. Spikepin (3) nach Anspruch 1 oder 2, **dadurch gekennzeichnet, dass** der Winkel (a), unter welchem die zwei gleichschenklig-trapezförmigen Hauptflächen (5d) relativ zur Querschnittebene (E₁) des äußeren Abschnittes (3a) geneigt sind, bis zu 10° beträgt.

4. Spikepin (3) nach einem der Ansprüche 1 bis 3, **dadurch gekennzeichnet, dass** die Griffkanten (5a, 5b, 5c) zumindest zum Teil angefast sind.

5. Spikepin (3) nach Anspruch 4, **dadurch gekennzeichnet, dass** die Griffkanten (5a, 5b, 5c), welche jene Trapezschenkel der gleichschenklig-trapezförmigen Hauptfläche (5d) bilden, die von der Querschnittebene (E₁) weiter entfernt sind, doppelt-angefast sind und daher mit zwei Fasen (5a', 5a") versehen sind.

6. Spikepin (3) nach Anspruch 5, **dadurch gekennzeichnet, dass** die zwei Fasen (5a', 5a") miteinander einen Winkel von 20° bis 45° einschließen.

7. Spikepin (3) nach einem der Ansprüche 1 bis 6, **dadurch gekennzeichnet, dass** er über seine gesamte Erstreckung einen sechseckigen, insbesondere regelmäßig sechseckigen, Querschnitt aufweist.

8. Spike (1) mit einem Spikepin (3) nach einem oder mehreren der Ansprüche 1 bis 7.

9. Fahrzeugluftreifen mit einem Laufstreifen, in welchen eine Vielzahl von Spikes gemäß Anspruch 8 eingesetzt ist.

## Claims

1. Spike pin (3), which can be inserted into a spike body (2) of a spike (1) for a tread of a pneumatic vehicle tyre, wherein the spike pin (3) has a main axis (a₁) and, in the state in which it is inserted in the spike body (2), an outer portion (3a), which projects out of the body and has an upper side (5), wherein at least this portion (3a) has a hexagonal cross section and its upper side (5) is delimited by grip edges (5a, 5b, 5c),
**characterized in that** on the upper side (5) of the spike pin (3) there are formed exactly two planar main surfaces (5d), which in plan view are in the form of an isosceles trapezoid and are inclined at an angle (a) of 5° to 20° relative to a cross-sectional plane (E₁) of the outer portion (3a), to which the main axis (a₁) of the spike pin (3) is aligned perpendicularly, wherein the upper side (5) is of a rotationally symmetrical design such that it is projected onto itself just by means of a rotation through 180° about the main axis (a₁) of the spike pin (3).

2. Spike pin (3) according to Claim 1, **characterized in that** at least the outer portion (3a) of the spike pin (3) has a regular hexagonal cross section.

3. Spike pin (3) according to Claim 1 or 2, **characterized in that** the angle (a) at which the two main surfaces (5d) in the form of an isosceles trapezoid are inclined relative to the cross-sectional plane (E₁) of the outer portion (3a) is up to 10°.

4. Spike pin (3) according to one of Claims 1 to 3, **characterized in that** the grip edges (5a, 5b, 5c) are at least partly bevelled.

5. Spike pin (3) according to Claim 4, **characterized in that** the grip edges (5a, 5b, 5c) which form those sides of the trapezoid of the main surface (5d) in the form of an isosceles trapezoid that are further away from the cross-sectional plane (E₁) are double-bevelled and are therefore provided with two bevels (5a', 5a").

6. Spike pin (3) according to Claim 5, **characterized in that** the two bevels (5a', 5a") form an angle with one another of 20° to 45°.

7. Spike pin (3) according to one of Claims 1 to 6, **characterized in that** it has over its entire extent a hexagonal, in particular regularly hexagonal, cross section.

8. Spike (1) with a spike pin (3) according to one or more of Claims 1 to 7.

9. Pneumatic vehicle tyre with a tread, in which a multiplicity of spikes according to Claim 8 are inserted.

## Revendications

1. Tige de clou (3), qui peut être insérée dans un corps de clou (2) d'un clou (1) pour une bande de roulement d'un pneumatique de véhicule, la tige de clou (3) présentant un axe principal (a₁) ainsi que, à l'état inséré dans le corps de clou (2), une partie extérieure (3a) dépassant de celui-ci avec un côté supérieur (5), au moins cette partie (3a) présentant une section transversale hexagonale et son côté supérieur (5) étant délimité par des bords de préhension (5a, 5b, 5c), **caractérisée en ce que**
sur le côté supérieur (5) de la tige de clou (3) sont réalisées exactement deux surfaces principales (5d) planes, isocèles-trapézoïdales en vue de dessus, qui sont inclinées, par rapport à un plan de section transversale (E₁) de la partie extérieure (3a), par rapport auquel l'axe principal (a₁) de la tige de clou (3) est orienté perpendiculairement, d'un angle (a) de 5° à 20°, le côté supérieur (5) étant conçu avec une symétrie de rotation telle qu'il est reproduit sur lui-même exclusivement par une rotation de 180° autour de l'axe principal (a₁) de la tige de clou (3).

2. Tige de clou (3) selon la revendication 1, **caractérisée en ce qu'**au moins la partie extérieure (3a) de la tige de clou (3) présente une section transversale hexagonale régulière.

3. Tige de clou (3) selon la revendication 1 ou 2, **caractérisée en ce que** l'angle (a) selon lequel les deux surfaces principales isocèles-trapézoïdales (5d) sont inclinées par rapport au plan de section transversale (E₁) de la partie extérieure (3a) est de jusqu'à 10°.

4. Tige de clou (3) selon l'une quelconque des revendications 1 à 3, **caractérisée en ce que** les bords de préhension (5a, 5b, 5c) sont au moins partiellement chanfreinés.

5. Tige de clou (3) selon la revendication 4, **caractérisée en ce que** les bords de préhension (5a, 5b, 5c) qui forment les branches de trapèze de la surface principale isocèle-trapézoïdale (5d) qui sont plus éloignés du plan de section transversale (E₁) sont doublement chanfreinés et sont donc pourvus de deux chanfreins (5a', 5a").

6. Tige de clou (3) selon la revendication 5, **caractérisée en ce que** les deux chanfreins (5a', 5a") forment entre eux un angle de 20° à 45°.

7. Tige de clou (3) selon l'une quelconque des revendications 1 à 6, **caractérisée en ce qu'**elle présente sur toute son étendue une section transversale hexagonale, notamment hexagonale régulière.

8. Clou (1) avec une tige de clou (3) selon une ou plusieurs des revendications 1 à 7.

9. Pneumatique de véhicule avec une bande de roulement dans laquelle sont insérés une pluralité de clous selon la revendication 8.
